# EUROPÄISCHE PATENTSCHRIFT

(11) **EP 2 135 936 B1**
(45) Veröffentlichungstag und Bekanntmachung des Hinweises auf die Patenterteilung: **20.07.2011**
(21) Anmeldenummer: 09006575.6
(22) Anmeldetag: 15.05.2009
(51) Int. Cl.: C12C 7/17

(54) **Austrebereinrichtung für einen Läuterbottich**
Drift bolt device for a refining barrel
Dispositif extracteur pour une cuve de clarification

(30) Priorität: 19.06.2008 DE 102008028867
(43) Veröffentlichungstag der Anmeldung: 23.12.2009
(73) Patentinhaber: GEA BREWERY SYSTEMS GMBH, 97318 Kitzingen (DE)
(72) Erfinder: Scheller, Ludwig, Dr., 56729 Ettringen (DE); Bahns, Patrick, 97318 Kitzingen (DE); Makowski, Josef, 97318 Kitzingen (DE); Ziegler, Georg, 97318 Kitzingen (DE); Bauer, Stephan, 97199 Ochsenfurt (DE)
(74) Vertreter: von den Steinen, Axel

(56) Entgegenhaltungen:
- EP-A1- 1 683 854
- WO-A1-2004/016725
- DE-B- 1 187 576
- DE-C1- 3 829 162
- DE-U1- 20 221 409
- DE-U1- 29 509 409

## Beschreibung

Die Erfindung betrifft eine Austrebereinrichtung für einen Läuterbottich nach dem Oberbegriff des Anspruchs 1.

Beim Abläutern der Würze während der Bierherstellung bildet sich am Boden des Läuterbottichs ein Treberkuchen, der als Filterschicht dient. Nach Beendigung des Abläuterprozesses muss der Treberkuchen aus dem Läuterbottich entfernt werden. Zum Entfernen des Treberkuchens aus dem Läuterbottich werden Austrebereinrichtungen eingesetzt. An diesen Austrebereinrichtungen ist zumindest ein Treberscheit vorgesehen, das zwischen einer erhöhten Ruhestellung und einer abgesenkten Austreberstellung verstellt werden kann. Außerdem kann das Treberscheit rotatorisch angetrieben werden, so dass in der Austreberstellung des Treberscheits der Treberkuchen aus dem Läuterbottich herausgefördert werden kann.

Zur Erreichung der Austreberstellung senkt sich das Treberscheit bis zur Oberfläche des Läuterbottichsenkbodens ab, damit der Treberkuchen beim Austrebern vom Läuterbottichsenkboden vollständig heruntergeschoben werden kann. Sobald das Treberscheit wieder in die Ruhestellung verfahren worden ist, besteht ein ausreichend großer Abstand zwischen Treberkuchen und Treberscheit, so dass das Abläutern durch das Treberscheit nicht gestört wird. Zur Verstellung des Treberscheits zwischen der Ruhestellung und der Austreberstellung bzw. zwischen der Austreberstellung und der Ruhestellung können verschiedenste Antriebseinrichtungen Verwendung finden.

Ein Problem gattungsgemäßer Austrebereinrichtungen ist es, dass es in seltenen Fällen zu Fehlfunktionen kommen kann, bei denen die Treberscheite nicht ordnungsgemäß in der erhöhten Ruhestellung fixiert sind und ungewollt in die abgesenkte Austreberstellung übergehen. Wird dann beispielsweise die Aufhackmaschine in Rotation versetzt und werden die Treberscheite zusammen mit der Aufhackmaschine durch den Treberkuchen gezogen, so wird die gesamte Filterschicht des Treberkuchens zerstört und eine nur mangelhafte Würzequalität erreicht.

Um diese Fehlfunktion zumindest erkennen zu können, um dann geeignete Abhilfemaßnahmen einzuleiten, schlägt die DE 102 33 513 einen Positionssensor vor, mit dem die Lage des Treberscheits detektiert werden kann. Nachteilig bei dem bekannten Positionssensor ist es, dass dieser geeignet verkabelt sein muss, um zum einen die Energieversorgung des Sensors zu gewährleisten und andererseits die Sensorsignale vom Positionssensor an die übergeordnete Steuerungseinrichtung zu übertragen. Die Verkabelung des Positionssensors stellt jedoch aufgrund der notwendigen Anordnung des Positionssensors nahe der Treberscheite einen hohen Installationsaufwand dar. Außerdem haben sich die bekannten Verkabelungssysteme als störungsanfällig erwiesen, da im Inneren des Läuterbottichs hohe Temperaturen und eine ungünstige Dampfatmosphäre herrschen.

Ausgehend von diesem Stand der Technik ist es deshalb Aufgabe der vorliegenden Erfindung, eine neue Austrebereinrichtung mit Positionssensorik für die Treberscheite vorzuschlagen, die eine hohe Zuverlässigkeit aufweist und kostengünstig installiert werden kann.

Diese Aufgabe wird durch eine Austrebereinrichtung nach der Lehre des Anspruchs 1 gelöst.

Vorteilhafte Ausführungsformen der Erfindung sind Gegenstand der Unteransprüche.

Grundgedanke der Erfindung ist es, dass zur Installation des Positionssensors keinerlei Verkabelung installiert werden muss. Um dies zu erreichen, ist der Positionssensor erfindungsgemäß mit einer Sendeeinheit ausgestattet bzw. mit einer Sendeeinheit verbunden, so dass die Sensordaten des Positionssensors zur Beschreibung der Lage des Treberscheits von der Sendeeinheit drahtlos an eine ortsfest montierte Empfangseinheit übertragen werden können. Von der Empfangseinheit können die Sensordaten dann wiederum in konventioneller Technik an die übergeordnete Steuerungseinrichtung weitergegeben werden. Gemäß dem zweiten Aspekt der erfindungsgemäßen Austrebereinrichtung ist zur Versorgung der Sendeeinheit mit elektrischer Energie eine elektromechanische Generatoreinheit vorgesehen, mit der mechanische Antriebsbewegungen in elektrische Versorgungsleistungen umgewandelt werden können. Die Generatoreinheit ist dabei so installiert, dass die Stellbewegungen der Austrebereinrichtung über eine Übertragungseinrichtung als Antriebsbewegungen auf die Generatoreinheit übertragen werden, so dass in der Generatoreinheit aus der Antriebsbewegung elektrische Energie zur Versorgung der Sendeeinheit erzeugt werden kann. Im Ergebnis ist somit der Positionssensor vollkommen autark und kann ohne Verkabelung an der Austrebereinrichtung in letztendlich beliebiger Position installiert werden. Die Verlegung von Datenkabeln bzw. von elektrischen Versorgungsleitungen entfällt vollkommen.

An welcher Stelle der Positionssensor installiert ist, ist grundsätzlich beliebig. Besonders große Vorteile bietet der erfindungsgemäße Positionssensor, wenn er zusammen mit der Austrebereinrichtung an einem rotatorisch antreibbaren Läuterbottichhackwerk befestigt ist, da die Verlegung von Kabeln bei derartigen Austrebereinrichtungen zur Versorgung des Positionssensors bzw. zur Datenübertragung an die übergeordnete Steuerung sehr aufwendig ist.

Die Bauart der Generatoreinheit zur Umwandlung der mechanischen Stellbewegung in die elektrische Energie ist grundsätzlich beliebig. Besonders zuverlässig und effektiv arbeiten Piezoelemente. In diesen Piezoelementen wird der piezoelektrische Effekt ausgenutzt, um mechanische Energie in elektrische Energie umzuwandeln.

Die Konstruktion der Übertragungseinrichtung ist wiederum beliebig. Besonders einfach und zuverlässig lässt sich die Übertragung der Stellbewegung auf die Generatoreinheit realisieren, wenn dazu ein Antriebsnocken vorgesehen ist, der bei Verstellung der Austrebereinrichtung verstellt wird. Mit diesem Antriebsnocken kann ein Stößel in Eingriff stehen, der seinerseits die Stellbewegung des Antriebsnockens auf das Piezoelement überträgt.

Auch die Anordnung der Empfangseinheit zum Empfang der Sensordaten von der Sendeeinheit ist grundsätzlich beliebig. Um die Empfangseinheit nicht gegen die hohen Temperaturen bzw. gegen den Dampf im Läuterbottich schützen zu müssen, ist es besonders vorteilhaft, wenn die Empfangseinheit außerhalb des Läuterbottichs angeordnet ist.

Die Bauart der Empfangseinheit ist beliebig, solange eine ausreichende Datenübertragung ermöglicht wird. Gemäß einer bevorzugten Ausführungsform ist die Empfangseinheit in der Art einer Mobilfunkantenne ausgebildet. Insbesondere Stabantennen sind zur Datenübertragung der Sensordaten geeignet. Soweit der Läuterbottich mit einem Schauglas, einem Mannlochdeckel oder einem Abdeckglas einer Beleuchtungseinrichtung ausgestattet ist, kann die Empfangseinheit auch an den entsprechenden Bauteilen im oder am Läuterbottich befestigt werden.

Eine besonders einfache Montage der Empfangseinheit ergibt sich, wenn diese in der Art einer Klebeantenne oder Wurfantenne ausgebildet ist. Um einen vollständigen Überblick über die Lage der Treberscheite im Läuterbottich zu erhalten, sollte der Positionssensor sowohl die Anordnung der Treberscheite in der Ruhestellung als auch die Anordnung der Treberscheite in der Austreberstellung erfassen können.

Vielfach sind an der Austrebereinrichtung mehrere Treberscheite vorgesehen, wobei jedes einzelne Treberscheit eine Störung des Treberkuchens verursachen kann. Dementsprechend ist es bei Verwendung mehrerer Treberscheite vorteilhaft, wenn an jedem Treberscheit ein Positionssensor zur Positionsüberwachung vorgesehen ist.

In welcher Weise die Sensordaten des Positionssensors weiterverarbeitet werden, ist grundsätzlich beliebig. Nach einer ersten bevorzugten Ausführungsform ist eine Anzeigeeinrichtung vorgesehen, die mit den Sensordaten des Positionssensors angesteuert wird. Auf diese Weise kann an der Anzeigeeinrichtung zumindest eine bestimmte Positionierung des Treberscheits signalisiert werden.

In Erweiterung dazu können die Sensordaten auch an eine Störanzeige weitergeleitet werden, um Fehlstellungen des Treberscheits zu signalisieren.

Alternativ bzw. additiv zur einfachen Signalisierung der Position des Treberscheits bzw. einer Fehlstellung des Treberscheits können die Sensordaten des Positionssensors auch in der Steuerung des Läuterbottichs ausgewertet und die Auswerteergebnisse zur Steuerung bzw. Regelung von Läuterprozessen verwendet werden.

Eine Ausführungsform der Erfindung ist in den Zeichnungen schematisch dargestellt und wird nachfolgend beispielhaft erläutert.

Es zeigen:
- Fig. 1: einen auf einem Hackwerkbalken angeordneten Positionssensor in seitlicher Ansicht;
- Fig. 2: den Positionssensor gemäß Fig. 1 bei Anordnung des Treber- scheits in der Ruhestellung in Ansicht von vorne;
- Fig. 3: den Positionssensor gemäß Fig. 2 bei Anordnung des Treber- scheits in der Austreberstellung.

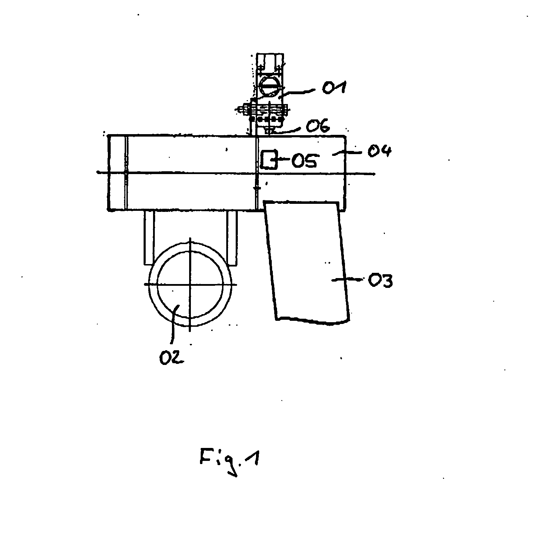

Fig. 1 zeigt einen Positionssensor 01, der auf einem Hackwerkbalken 02 in einem Läuterbottich angeordnet ist. Der Positionssensor 01 dient zur Detektierung der Lage eines nicht dargestellten Treberscheits, das mittels eines Gelenkarms 03 und einer Gelenkhülse 04 gelenkig an dem Hackwerkbalken 02 befestigt ist. An der Außenseite der Gelenkhülse 04 ist ein Antriebsnocken 05 angeordnet, der mit der Gelenkhülse 04 verschwenkt wird und somit Auskunft über die an der nicht dargestellten Unterseite des Gelenkarms 03 befestigten Treberscheite gibt.

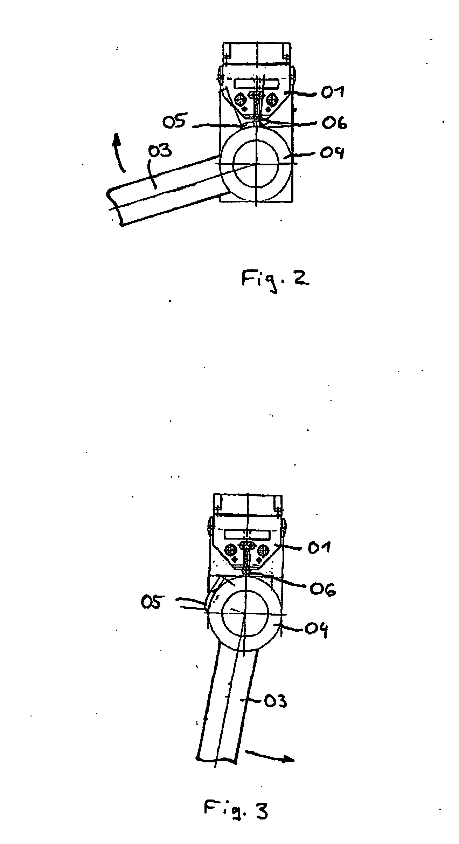

Fig. 2 zeigt den Positionssensors 01 bei Anordnung des nicht dargestellten Treberscheits in der Ruhestellung. Der Gelenkarm 03 wird dazu angehoben, so dass die Gelenlchülse 04 im Uhrzeigersinn verschwenkt wird und der Antriebsnocken 05 einen Stößel 06 im Positionssensor 01 nach oben drückt. Durch diese Stellbewegung des Stößels 06 wird im Positionssensor 01 ein Piezoelement betätigt, um eine kleinere Menge elektrischer Energie zu erzeugen. Mit dieser elektrischen Leistung wird dann eine Sendeeinrichtung betrieben, mit der die durch den Positionssensor 01 detektierte Verstellung des Treberscheits an eine nicht dargestellte Empfangseinheit übertragen wird.

Wie in Fig. 3 dargestellt, wird beim Herunterschwenken des Gelenkarms 03 der Antriebsnocken 05 wieder außer Eingriff des Stößels 06 gebracht, und durch diese Stellbewegung wird wiederum ein kurzer elektrischer Impuls mit einem Piezoelement erzeugt. Auch diese Verstellung kann dann mit der Sendeeinrichtung drahtlos an eine nicht dargestellte Empfangseinheit übertragen werden.

## Patentansprüche

1. Austrebereinrichtung für einen Läuterbottich, an der zumindest ein Treberscheit vorgesehen ist, das zwischen einer erhöhten Ruhestellung und einer abgesenkten Austreberstellung verstellt werden kann, wobei der Treber durch rotatorischen Antrieb des in der Austreberstellung angeordneten Treberscheits aus dem Läuterbottich herausgefördert werden kann, und wobei an der Austrebereinrichtung zumindest ein Positionssensor (01) vorgesehen ist, mit dem die Lage des Treberscheits in zumindest einer Position erfasst werden kann, **dadurch** gekenrizeichnet,
dass der Positionssensor (01) mit einer Sendeeinheit zusammenwirkt, wobei die Sensordaten des Positionssensors (01) zur Beschreibung der Lage des Treberscheits von der Sendeeinheit drahtlos an eine ortsfest montierte Empfangseinheit übertragen und von der Empfangseinheit an eine Steuerungseinrichtung weitergeleitet werden können, und wobei zur Versorgung der Sendeeinheit mit elektrischer Energie eine elektromechanische Generatoreinheit vorgesehen ist, wobei mit der Generatoreinheit mechanische Antriebsbewegungen in elektrische Versorgungsleistung umgewandelt werden können, und wobei mittels einer Übertragungseinrichtung die Stellbewegungen der Austrebereinrichtung als Antriebsbewegungen mittelbar oder unmittelbar auf die Generatoreinheit übertragbar sind.

2. Austrebereinrichtung nach Anspruch 1,
**dadurch gekennzeichnet,**
**dass** der Positionssensor (01) und die Austrebereinrichtung an einem rotatorisch antreibbaren Läuterbottichhackwerk befestigt sind.

3. Austrebereinrichtung nach Anspruch 1 oder 2,
**dadurch gekennzeichnet,**
**dass** die Generatoreinheit ein Piezoelement zur Umwandlung der mechanischen Antriebsbewegungen in elektrische Versorgungsleistung umfasst.

4. Austrebereinrichtung nach einem der Ansprüche 1 bis 3,
**dadurch gekennzeichnet,**
**dass** die Übertragungseinrichtung einen Antriebsnocken (05) umfasst, der bei Verstellung der Austrebereinrichtung verstellt wird, wobei der Antriebsnocken (05) mit einem Stößel (06) in Eingriff steht, der die Stellbewegung des Antriebsnockens (05) auf das Piezoelement überträgt.

5. Austrebereinrichtung nach einem der Ansprüche 1 bis 4,
**dadurch gekennzeichnet,**
**dass** die Empfangseinheit außerhalb des Läuterbottichs angeordnet ist.

6. Austrebereinrichtung nach einem der Ansprüche 1 bis 5,
**dadurch gekennzeichnet,**
**dass** die Empfangseinheit in der Art einer Mobilfunkantenne, insbesondere in der Art einer Stabantenne, ausgebildet ist.

7. Austrebereinrichtung nach einem der Ansprüche 1 bis 6,
**dadurch gekennzeichnet,**
**dass** die Empfangseinheit an einem Schauglas des Läuterbottichs, an einem Mannlochdeckel des Läuterbottichs oder an einem Abdeckglas einer Beleuchtungseinrichtung des Läuterbottichs angeordnet ist.

8. Austrebereinrichtung nach einem der Ansprüche 1 bis 7,
**dadurch gekennzeichnet,**
**dass** die Empfangseinheit in der Art einer Klebeantenne oder Wurfantenne ausgebildet ist.

9. Austrebereinrichtung nach einem der Ansprüche 1 bis 8,
**dadurch gekennzeichnet,**
**dass** mit dem Positionssensor (01) die Anordnung des Treberscheits in der Ruhestellung und/oder die Anordnung des Treberscheits in der Austreberstellung erfasst werden kann.

10. Austrebereinrichtung nach einem der Ansprüche 1 bis 9,
**dadurch gekennzeichnet,**
**dass** an der Austrebereinrichtung mehrere Treberscheite vorgesehen sind, wobei an jedem Treberscheit ein Positionssensor (01) vorgese-hen ist, so dass die Position jedes Treberscheits einzeln erfasst werden kann.

11. Austrebereinrichtung nach einem der Ansprüche 1 bis 10,
**dadurch gekennzeichnet,**
**dass** mit den Sensordaten des Positionssensors (01) eine Anzeigeeinrichtung derart angesteuert wird, dass an einer Anzeigeeinrichtung bestimmte Positionen des Treberscheits signalisiert werden können.

12. Austrebereinrichtung nach einem der Ansprüche 1 bis 11,
**dadurch gekennzeichnet,**
**dass** mit den Sensordaten des Positionssensors (01) eine Störanzeige derart angesteuert wird, dass an der Störanzeige eine Fehlstellung des Treberscheits signalisiert wird.

13. Austrebereinrichtung nach einem der Ansprüche 1 bis 12,
**dadurch gekennzeichnet,**
**dass** die Sensordaten des Positionssensors (01) an die Steuerung des Läuterbottichs übertragen werden, wobei die Steuerung des Läuterbottichs die Position des Treberscheits abfragen und die Prozesse im Läuterbottich entsprechend steuern oder regeln kann.

## Claims

1. A grains-removing device for a lauter tun on which at least one grains-removing member is provided which can be adjusted between a raised neutral position and a lowered grains-removing position, wherein the spent grains can be conveyed out of the lauter tun by rotationally driving the grains-removing member that is arranged in the grains-removing position, and wherein on the grains-removing device, at least one position sensor (01) is provided, by means of which the position of the grains-removing member can be detected in at least one position,
**characterized in that**
the position sensor (01) interacts with a transmitter unit, wherein the sensor data of the position sensor (01) for the description of the position of the grains-removing member can be transmitted in a wireless manner from the transmitter unit to a stationary mounted receiver unit and transferred from the receiver unit to a control unit, and wherein for the supply of electrical energy to the transmitter unit, an electro-mechanical generator unit is provided, wherein with the generator unit, mechanical drive movements can be transformed into electrical supply power, and wherein by means of a transmission device, the adjusting movements of the grains-removing device can be transmitted as drive movements directly or indirectly to the generator unit.

2. The grains-removing device according to claim 1,
**characterized in that**
the position sensor (01) and the grains-removing device are mounted to a rotationally drivable lauter tun chopping unit.

3. The grains-removing device according to claim 1 or claim 2,
**characterized in that**
the generator unit comprises a piezo element for transforming the mechanical drive movements into electrical supply power.

4. The grains-removing device according to any one of the claims 1 to 3,
**characterized in that**
the transmission device comprises a drive cam (05) which is moved during the adjustment of the grains-removing device, wherein the drive cam (05) is engaged with a tappet (06) which transmits the adjusting movement of the drive cam (05) to the piezo element.

5. The grains-removing device according to any one of the claims 1 to 4,
**characterized in that**
the receiver unit is arranged outside of the lauter tun.

6. The grains-removing device according to any one of the claims 1 to 5,
**characterized in that**
the receiver unit is designed in the form of a mobile radio antenna, in particular in the form of a rod antenna.

7. The grains-removing device according to any one of the claims 1 to 6,
**characterized in that**
the receiver unit is arranged on a sight glass of the lauter tun, on a manhole cover of the lauter tun, or on a cover glass of a lighting device of the lauter tun.

8. The grains-removing device according to any one of the claims 1 to 7,
**characterized in that**
the receiver unit is designed in the form of an adhesive antenna or a throw-out antenna.

9. The grains-removing device according to any one of the claims 1 to 8,
**characterized in that**
with the position sensor (01), the arrangement of the grains-removing member in the neutral position and/or the arrangement of the grains-removing member in the grains-removing position can be detected.

10. The grains-removing device according to any one of the claims 1 to 9,
**characterized in that**
on the grains-removing device, a plurality of grains-removing members are provided, wherein on each grains-removing member, a position sensor (01) is provided so that the position of each grains-removing member can be detected individually.

11. The grains-removing device according to any one of the claims 1 to 10,
**characterized in that**
with the sensor data of the position sensor (01), a display device can be controlled in such a manner that on a display device, certain positions of the grains-removing member can be signalized.

12. The grains-removing device according to any one of the claims 1 to 11,
**characterized in that**
with the sensor data of the position sensor (01), a fault display is controlled in such a manner that on the fault display, a false position of the grains-removing member is signalized.

13. The grains-removing device according to any one of the claims 1 to 12,
**characterized in that**
the sensor data of the position sensor (01) are transferred to the control unit of the lauter tun, wherein the control unit of the lauter tun can query the position of the grains-removing member and can control or regulate the processes within the lauter tun accordingly.

## Revendications

1. Dispositif de dédrêchage pour une cuve de clarification, comprenant au moins un racloir à drêche qui est déplaçable entre une position de repos relevée et une position de dédrêchage abaissée, la drêche pouvant être retirée de la cuve de clarification par un entraînement rotatif du racloir à drêche qui est agencé dans la position de dédrêchage, le dispositif de dédrêchage étant muni d'au moins un capteur de position (01) permettant la détermination d'au moins une position du racloir à drêche,
**caractérisé en ce que**
le capteur de position (01) coopère avec une unité émettrice, les données de capteur du capteur de position (01) pour la description de la position du racloir à drêche pouvant être transmises sans fil de l'unité émettrice à une unité réceptrice qui est montée fixement, et les données de capteur pouvant être transférées de l'unité réceptrice à un dispositif de commande, une unité de générateur électromécanique étant prévue pour l'alimentation de l'unité émettrice en énergie électrique, l'unité de générateur permettant la conversion de mouvements d'entraînement mécaniques en puissance d'alimentation électrique, et les mouvements de réglage du dispositif de dédrêchage pouvant être transmises à l'unité de générateur de manière directe ou indirecte en tant que mouvements d'entraînement au moyen d'un dispositif de transmission.

2. Dispositif de dédrêchage selon la revendication 1,
**caractérisé en ce que**
le capteur de position (01) et le dispositif de dédrêchage sont fixés à une unité de hachage de la cuve de clarification qui peut être entraînée de manière rotative.

3. Dispositif de dédrêchage selon la revendication 1 ou 2,
**caractérisé en ce que**
l'unité de générateur comprend un élément piezo pour la conversion des mouvements d'entraînement mécaniques en puissance d'alimentation électrique.

4. Dispositif de dédrêchage selon l'une quelconque des revendications 1 à 3,
**caractérisé en ce que**
le dispositif de transmission comprend une came d'entraînement (05) qui est ajustée lors du réglage du dispositif de dédrêchage, la came d'entraînement (05) s'engrenant avec un pilon (06) qui transmet à l'élément piezo le mouvement de réglage de la came d'entraînement (05).

5. Dispositif de dédrêchage selon l'une quelconque des revendications 1 à 4,
**caractérisé en ce que**
l'unité réceptrice est agencée à l'extérieur de la cuve de clarification.

6. Dispositif de dédrêchage selon l'une quelconque des revendications 1 à 5,
**caractérisé en ce que**
l'unité réceptrice est façonnée en forme d'une antenne de radiocommunication mobile, en particulier en forme d'une antenne de barre.

7. Dispositif de dédrêchage selon l'une quelconque des revendications 1 à 6,
**caractérisé en ce que**
l'unité réceptrice est agencée à un verre de regard de la cuve de clarification, à un couvercle de trou d'homme de la cuve de clarification ou à un verre de couverture d'un dispositif d'éclairage de la cuve de clarification.

8. Dispositif de dédrêchage selon l'une quelconque des revendications 1 à 7,
**caractérisé en ce que**
l'unité réceptrice est façonnée en forme d'une antenne adhésive ou en forme d'une antenne de jet.

9. Dispositif de dédrêchage selon l'une quelconque des revendications 1 à 8,
**caractérisé en ce que**
le capteur de position (09) permet de déterminer l'agencement du racloir à drêche dans la position de repos et/ou l'agencement du racloir à drêche dans la position de dédrêchage.

10. Dispositif de dédrêchage selon l'une quelconque des revendications 1 à 9,
**caractérisé en ce que**
plusieurs racloirs à drêche sont prévus au dispositif de dédrêchage, chaque racloir à drêche étant muni d'un capteur de position (01) afin de permettre de déterminer la position de chaque racloir à drêche séparément.

11. Dispositif de dédrêchage selon l'une quelconque des revendications 1 à 10,
**caractérisé en ce qu'**
un dispositif d'affichage est commandé par les données de capteur du capteur de position (01) de telle manière que certaines positions du racloir à drêche peuvent être signalisées sur un dispositif d'affichage.

12. Dispositif de dédrêchage selon l'une quelconque des revendications 1 à 11,
**caractérisé en ce qu'**
un affichage d'erreur est commandé par les données de capteur du capteur de position (01) de telle manière qu'une position erronée du racloir à drêche est signalisée sur l'affichage d'erreur.

13. Dispositif de dédrêchage selon l'une quelconque des revendications 1 à 12,
**caractérisé en ce que**
les données de capteur du capteur de position (01) sont transmises à l'unité de commande de la cuve de clarification, l'unité de commande de la cuve de clarification pouvant vérifier la position du racloir à drêche et pouvant commander ou régler les procédures dans la cuve de clarification de manière correspondante.
